# EUROPEAN PATENT SPECIFICATION

(11) **EP 2 733 167 B1**
(45) Date of publication and mention of the grant of the patent: **04.11.2015**
(21) Application number: 13192628.9
(22) Date of filing: 13.11.2013
(51) Int. Cl.: C08K 5/39, C08L 21/00, C08L 7/00, B60C 1/00, C08K 3/04, C08K 3/36, B60C 17/00

(54) **Rubber composition and tire**
Kautschukzusammensetzung und Reifen
Composition de caoutchouc et pneu

(30) Priority: 20.11.2012 US 201213681624
(43) Date of publication of application: 21.05.2014
(73) Proprietor: The Goodyear Tire & Rubber Company, Akron, Ohio 44316 (US)
(72) Inventor: Speretto, Elena, L-7364 Bofferdange (LU); Schmitz, Frank, L-7782 Bissen (LU); Agostini, Giorgio, L-7733 Colmar-Berg (LU)
(74) Representative: Kutsch, Bernd

(56) References cited:
- EP-A1- 1 197 518
- JP-A- 2005 263 892
- JP-A- 2009 292 310
- JP-A- 2009 292 942
- KR-A- 20020 042 110
- KR-A- 20100 062 423
- US-A1- 2002 036 043
- US-A1- 2008 103 246
- US-A1- 2010 000 639
- PARK: "Effects of 1, 6-bis (N, N'-dibenzyl thiocarbamoyl dithio)-Hexane on Properties of Filled Natural Rubber Vulcanizates", JOURNAL OF INDUSTRIAL AND ENGINEERING CHEMISTRY, vol. 8, no. 3, 1 January 2002 (2002-01-01) , page 197, XP055056699, ISSN: 1226-086X

## Description

Various tire constructions have been suggested for pneumatic runflat tires; that is, tires capable of being used while uninflated (with total loss of air pressure other than ambient atmospheric pressure). A vehicle equipped with such tires can continue to be driven after the tire experiences loss of pneumatic pressure, such as loss of air pressure caused by puncture or valve failure. This is highly desirable since it allows vehicles equipped with such runflat tires to continue in operation until they reach a location where the tire can be repaired or replaced. Tires of this type are sometimes also referred to as extended mobility tires (EMT).

The goal of engineering has been to develop a runflat tire without compromising ride or performance. In sports cars having relatively stiff suspension characteristics, the ability to provide such a runflat tire was comparatively easy as compared to providing such tires for luxury sedans that demand softer ride characteristics. Light truck and sport utility vehicles, although not as sensitive to ride performance, typically utilize tires having a relatively high aspect ratio which makes the requirements for the runflat tire more challenging.

In the case of runflat tires made utilizing stiff inserts, the insert carries most of the load on the tire during periods of operation after loss of air pressure. This leads to the generation of heat. Heat build-up can then lead to thermal degradation in the insert. A reduction in crosslink density and a change in the distribution of crosslink types is the result of this thermal degradation. Thermal degradation can accordingly limit the distance over which the runflat tire can be used during periods of operation after air loss.

US-A- 2002/0036043 describes a pneumatic runflat tire in accordance with the preamble of claim 1.

Further rubber compositions for use in a tire comprising at least one diene based elastomer, sulfur and a vulcanization modifier are described in US-A- 2010/000639, US-A- 2008/103246, JP-A- 2009-292310, KR-A- 2002-0042110, JP-A- 2009-292942, KR-A- 2010-00624623 and JP-A- 2005-263892.

### Summary of the Invention

The invention is directed to a tire in accordance with claim 1.

Dependent claims refer to preferred embodiments of the invention.

### Brief Description of the Drawings

Figure 1 is a fragmentary cross-sectional view of a tire showing its tread and carcass with one ply and one insert axially inward of the ply in the sidewall region of the tire as an embodiment of the invention.
Figure 2 is a fragmentary cross-sectional view of a tire showing its tread and carcass with two plies, a second insert interposed between the plies and a second ply axially outward of the innermost ply in the sidewall region of the tire as an embodiment of the invention.
Figure 3 is a fragmentary cross-sectional view of a tire showing its tread and carcass with three plies, inserts between the plies and another insert axially inward of the innermost ply in the sidewall region of the tire as an embodiment of the invention.
Figure 4 illustrates the effect of varying the sulfur content in a rubber composition while holding accelerator and modifier contents constant.
Figure 5 illustrates the effect of varying the accelerator content in the rubber composition while holding sulfur and modifier contents constant.
Figure 6 illustrates the effect of varying the modifier content in the rubber composition while holding sulfur and accelerator contents constant.

### Detailed Description of the Invention

There is disclosed a rubber composition comprising at least one diene based elastomer; an α,ω-bis(N,N'-dihydrocarbylthiocarbamamoyldithio)alkane; and sulfur in a form selected from the group consisting of elemental sulfur and insoluble sulfur; wherein the rubber composition is essentially free of cure accelerators.

There is further disclosed a pneumatic tire comprising the rubber composition.

In one embodiment, the rubber composition is further vulcanizable.

In one embodiment, the vulcanization state of the rubber composition is between its T₂₅ and T₈₀ vulcanization states.

In one embodiment, the rubber composition has a first modulus and a second modulus, the first modulus existing after the normal cure cycle of a runflat tire, and the second modulus obtainable during a runflat condition of the tire, wherein the second modulus is greater than the first modulus.

In one embodiment, to obtain a rubber composition wherein the rubber composition is further vulcanizable, at least one vulcanization modifier may be added to the rubber composition. By "vulcanization modifier," it is meant that such a vulcanization modifier will have the effect of affecting the vulcanization of the rubber composition during the normal cure cycle of the rubber composition, such that the vulcanization state in the rubber composition is less than its fully cured vulcanization state after the normal cure cycle. The rubber composition is capable of further cure to a more fully cured vulcanization state upon experience of a higher temperature environment, such as a tire deflation during a runflat event in a runflat tire.

A cured rubber composition, for the purposes of the discussion for this invention, is a sulfur cured rubber composition, conventionally a sulfur cured diene-based rubber, which has been cured to a substantial inflection of its modulus (y axis) versus time (x axis) curve. Depending on the method used to measure the cure kinetics, a property related to modulus, such as torque, may be used. In particular, such curve conventionally is a curve with a positive slope which rises over time until it experiences a substantial inflection in a manner that its slope reaches a plateau where it becomes substantially horizontal. In such region of a slope transition, which is somewhat of a maximization of the slope, although the slope might still very gradually rise, it is considered that the rubber composition is fully cured. In the presence of a vulcanization modifier, the shape of the curve may be somewhat modified, depending on the modifier used. The net effect of the vulcanization modifier is to modify the vulcanization of the rubber composition such that the rubber composition exists in a first vulcanization state after the normal cure cycle for example in a sidewall insert of a runflat tire, and the rubber composition may obtain a second vulcanization state upon experience of a higher temperature environment, such as a tire deflation during a runflat event.

In one embodiment, the vulcanization state of the rubber composition is between its T₂₀ and T₈₀ vulcanization states after the normal cure cycle. In another embodiment, the vulcanization state of the rubber composition is between its T₄₀ and T₆₀ vulcanization states after the normal cure cycle. The rubber composition is further vulcanizable and may obtain a second vulcanization state upon experience of a higher temperature environment, such as a tire deflation during a runflat event. The "T-points" (ie, T₉₀, T₂₅, T₈₀, etc.) represent vulcanization states, are recognizable to one skilled in the art and are defined in ASTM D2084, D5289 and ISO 6502 and are fully described in a presentation given by H.G. Buhrin at Tyretech '90 in Brighton, England, November 5-6 1990. The T-points are determined using the Flexsys Rubber Process Analyzer (RPA) 2000. A description of the RPA 2000, its capability, sample preparation, tests and subtests can be found in these references. H A Pawlowski and J S Dick, Rubber World, June 1992; J S Dick and H A Pawlowski, Rubber World, January 1997; and J S Dick and J A Pawlowski, Rubber & Plastics News, April 26 and May 10, 1993.

By allowing the rubber composition of the insert to be in less than its fully cured vulcanization state after the normal cure cycle for the runflat tire, it is contemplated that upon experience a deflation event, the heat generated during the event will cause the rubber composition to further cure with an increase in stiffness (modulus) delaying the onset of degradation of the insert. The driver thereby gains precious time to slow and stop before degradation of the insert. The less than fully cured rubber composition also imparts a degree of softness to the insert, which affords a more comfortable ride on the runflat tires during normal use.

In one embodiment, the vulcanization modifier for use in the rubber composition is an α,ω-bis(N,N'-dihydrocarbylthiocarbamamoyldithio)alkanes.

In one embodiment, the vulcanization modifier is a α,ω-bis(N,N'-dihydrocarbylthiocarbamamoyldithio)alkanes. Suitable α,ω)-bis(N,N'-dihydrocarbylthiocarbamamoyldithio)alkanes include 1,2-bis(N,N'-dibenzylthiocarbamoyl-dithio)ethane; 1,3-bis(N,N'-dibenzylthiocarbamoyldithio)propane; 1,4-bis(N,N'-dibenzylthiocarbamoyldithio)butane; 1,5-bis(N,N'-dibenzylthiocarbamoyl-dithio)pentane; 1,6-bis(N,N'-dibenzylthiocarbamoyldithio)hexane; 1,7-bis(N,N'-dibenzylthiocarbamoyldithio)heptane; 1,8-bis(N,N'-dibenzylthiocarbamoyl-dithio)octane; 1,9-bis(N,N'-dibenzylthiocarbamoyldithio)nonane; and 1,10-bis(N,N'-dibenzylthiocarbamoyldithio)decane. In one embodiment, the vulcanization modifier is 1,6-bis(N,N'-dibenzylthiocarbamoyldithio)hexane available as Vulcuren® from Lanxess.

In one embodiment, the rubber composition may comprise from 1 to 10 parts by weight, per 100 parts by weight of elastomer (phr), of the vulcanization modifier. In another embodiment, the rubber composition may comprise from 2 to 8 phr of vulcanization modifier.

The present invention may be used with rubbers or elastomers containing olefinic unsaturation. The phrase "rubber or elastomer containing olefinic unsaturation" is intended to include both natural rubber and its various raw and reclaim forms as well as various synthetic rubbers. In the description of this invention, the terms "rubber" and " elastomer" may be used interchangeably, unless otherwise prescribed. The terms "rubber composition", "compounded rubber" and "rubber compound" are used interchangeably to refer to rubber which has been blended or mixed with various ingredients and materials. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polybutadiene and SBR.

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, napthenic, vegetable oils, and low PCA oils, such as MES, TDAE, SRAE and heavy naphthenic oils.

The vulcanizable rubber composition may include from 10 to 150 phr of silica.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

Various commercially available silicas may be used, such as, only for example herein, and without limitation, silicas commercially available from PPG Industries under the Hi-Sil trademark with designations 210 and 243; silicas available from Rhodia, with, for example, designations of Z1165MP, Z165GR; and Zeosil Premium 200MP, and silicas available from Degussa AG with, for example, designations VN2 and VN3.

The vulcanizable rubber composition may include from 1 to 100 phr of carbon black, crosslinked particulate polymer gel, ultra high molecular weight polyethylene (UHMWPE) or plasticized starch.

Commonly employed carbon blacks can be used as a conventional filler. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including particulate fillers including ultra high molecular weight polyethylene (UHMWPE), particulate polymer gels including those disclosed in US-B-6,242,534; US-B-6,207,757; US-B-6,133,364; US-B-6,372,857; US-A-5,395,891; or US-B-6,127,488, and plasticized starch composite filler including that disclosed in US-A-5,672,639.

In one embodiment the rubber composition for use in the tire tread may contain a conventional sulfur containing organosilicon compound. Examples of suitable sulfur containing organosilicon compounds are of the formula:

Z-Alk-Sₙ-Alk-Z I

in which Z is selected from the group consisting of 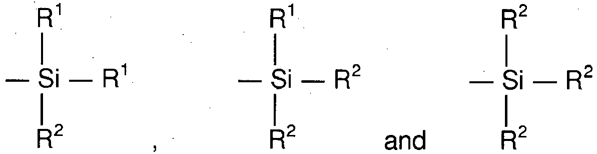 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) sulfides. In one embodiment, the sulfur containing organosilicon compounds are 3,3'-bis(triethoxysilylpropyl) disulfide and 3,3'-bis(triethoxysilylpropyl) tetrasulfide. Therefore, as to formula I, Z may be 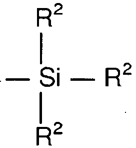 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-B-6,608,125. As disclosed in US-B-6,608,125, these sulfur containing organosilicon compounds are of the formula G-C(==O) -S-CH₂CH₂CH₂SiX₃ wherein each X is an independently selected RO- group wherein each R is independently selected from the group consisting of hydrogen, alkyl that may or may not contain unsaturation, alkenyl groups, aryl groups, and aralkyl groups, such moieties other than hydrogen having from 1 to 18 carbon atoms, and G is a monovalent alkyl of from 6 to 8 carbon atoms. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from GE Silicones.

In another embodiment, suitable sulfur containing organosilicon compounds include those disclosed in US-A-2003/0130535. As disclosed in US-A-2003/0130535, these sulfur containing organosilicon compounds are of the formulas III or IV 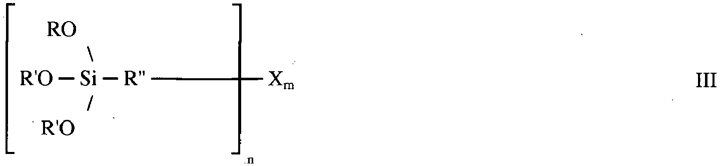 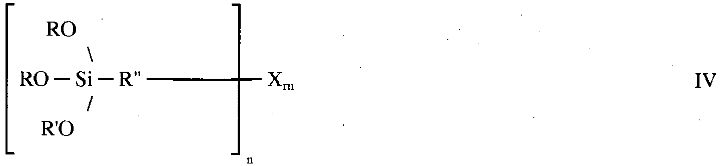
wherein: R is a methyl or ethyl group;
R' is identical or different and is a C₉C₃₀ branched or unbranched monovalent alkyl or alkenyl group, aryl group, aralkyl group, branched or unbranched C₂-C₃₀ alkyl ether group, branched or unbranched C₂-C₃₀ alkyl polyether group or R"'₃Si, where R'" is C₁-C₃₀ branched or unbranched alkyl or alkenyl group, aralkyl group or aryl group, R" is a branched or unbranched, saturated or unsaturated, aliphatic, aromatic or mixed aliphatic/aromatic divalent C₁-C₃₀ hydrocarbon group;
X is SH where n=1 and m=1, S where n=2 and m=1-10 and mixtures thereof, S(C==O)-R"' where n=1 and m=1 or H where n=1 and m=1;
R" may mean CH₂, CH₂CH₂, CH₂CH₂CH₂, CH₂CH₂CH₂CH₂, CH(CH₃), CH₂CH(CH₃), C(CH₃)₂, CH(C₂H₅), CH₂CH₂CH(CH₃), CH₂CH(CH₃)CH₂ or

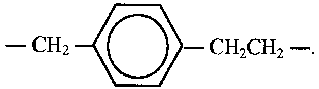

In one embodiment, the sulfur containing organosilicon compound is of formula III, R is ethyl, R' is C₁₂-C₁₄ alkyl, R" is CH₂CH₂CH₂, X is SH, n is 1 and m is 1. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids such as activators, and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 1 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

In typical rubber compositions, cure accelerators are used to control the time and/or temperature required for vulcanization and to improve the properties of the vulcanizate. In the present invention, no accelerator is used. Excluded accelerators for the present invention include but are not limited to amines, disulfides, guanidines, thioureas, thiazoles, thiurams, sulfenamides, dithiocarbamates and xanthates.

The rubber composition, as noted, excludes cure accelerators. However, as is known in the art some residual amount of cure accelerator may be present in mixing equipment and consequently appear in rubber compositions. The rubber composition is then said to be essentially free of cure accelerators. By essentially free, it is meant that the amount of cure accelerator, if any, is very low and preferably is present only due to contamination by process equipment and normal handling in the material procurement process. In one embodiment, the amount of cure accelerator is less than 0.1 phr. In one embodiment, the amount of cure accelerator is less than 0.05 phr. In one embodiment, the about of cure accelerator is less than 0.01 phr.

The rubber composition may be described as consisting essentially of a diene based elastomer, an α,ω-bis(N,N'-dihydrocarbylthiocarbamamoyldithio)alkane; and sulfur in a form selected from the group consisting of elemental sulfur and insoluble sulfur. In this instance, and as will be demonstrated in the accompanying examples, by "consisting essentially of " means that while other typical compounding additives as described herein may be present in the rubber composition, cure accelerators are not included as they have a material and undesirable effect on the behavior of the rubber composition.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in a final stage which is conventionally called a "productive" mix stage in which the mixing typically occurs at a temperature, or ultimate temperature, lower than the mix temperature(s) than the preceding non-productive mix stage(s). The rubber composition may be subjected to a thermomechanical mixing step. A thermomechanical mixing step generally comprises a mechanical working in a mixer or extruder for a period of time suitable in order to produce a rubber temperature between 140°C and 190°C. The appropriate duration of a thermomechanical working varies as a function of the operating conditions, and the volume and nature of the components. For example, a thermomechanical working may be from 1 to 20 minutes.

The pneumatic tire of the present invention may be a race tire, passenger tire, aircraft tire, agricultural, earthmover, off-the-road or truck tire. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes ma y be used such as heating in a press or mold, heating with superheated steam or hot air. Such tires can be built, shaped, molded and cured by various methods which are known and will be readily apparent to those having skill in such art.

The rubber composition is incorporated into a sidewall insert in a runflat tire.

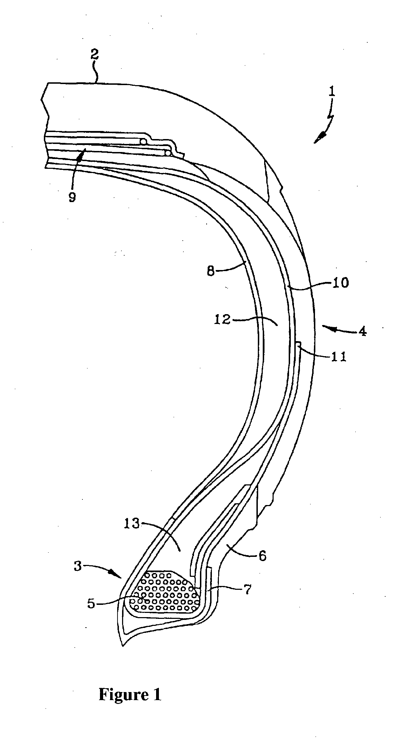

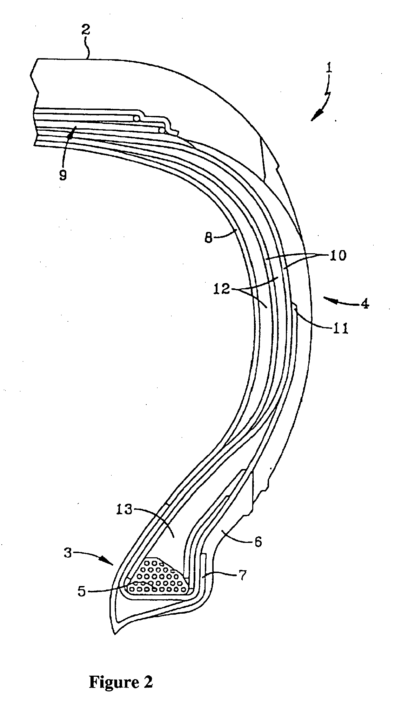

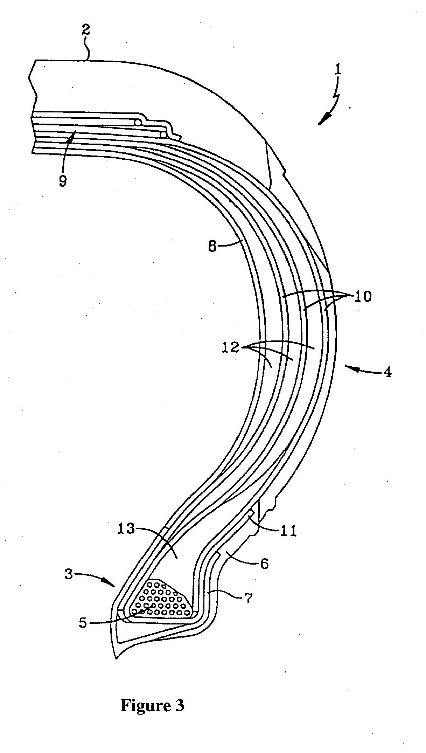

Referring to the drawings, Figures 1, 2 and 3 show the fragmentary cross-section of a runflat tire 1, its tread 2, bead portion 3, sidewall or sidewall region 4, inextensible wire bead core 5, rubber chafer 6, rubber toeguard 7, rubber composition innerliner 8, belt structure 9 underlying a portion of the tread 2, carcass ply 10, carcass ply turnup 11, insert 12 and apex 13.

The inserts 12 may extend from each bead region radially to the edge of the tread, usually to just beneath the reinforcing belt structures 9. As illustrated in the Figures, the sidewall portions may each include a first insert 12 and a second insert 12 and even a third insert 12. The first inserts 12 are positioned as described above. The second inserts 12 are located (interposed) between the first and the second plies 10, respectively. The second insert 12 extends from each bead region 3, or portion, radially outward to the edge of the tread 2, namely, to just beneath the reinforcing belt structure 9.

The invention is further illustrated by the following example.

### Example

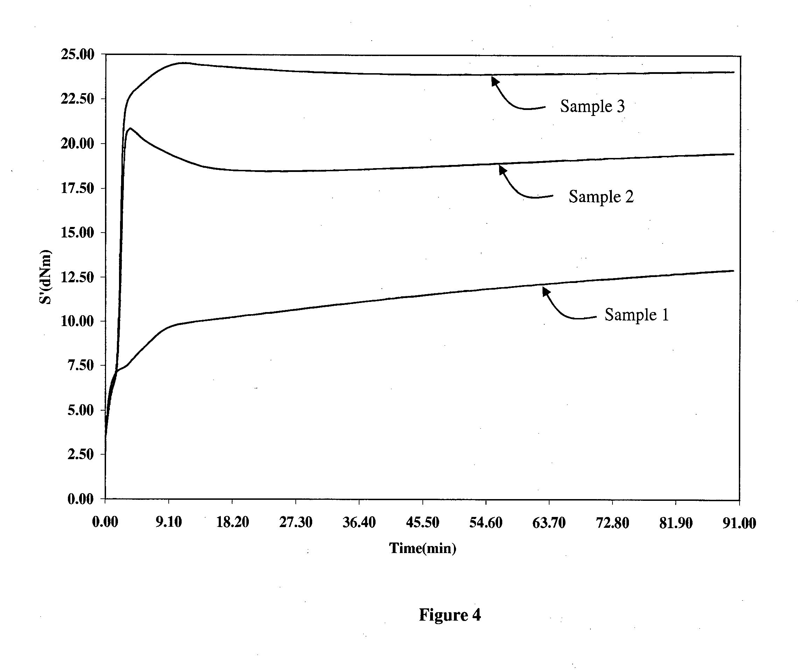

In this example, the effect of adding a vulcanization modifier to a rubber composition is illustrated. Seven samples were prepared following the recipes in Table 1, with amounts given in phr. Each composition was prepared in a multistage mix procedure with one non-productive stage and one productive stage. The samples were then tested for cure kinetics (moving die rheometer as model MDR-2000 by Alpha Technologies using a cure temperature of 160 °C) with results for torque S' versus time as shown in Figures 4, 5 and 6.

**Table 1**

| Sample | 1 | 2 | 3 | 4 | 5 | 6 | 7 |
|---|---|---|---|---|---|---|---|
| Natural Rubber | 100 | 100 | 100 | 100 | 100 | 100 | 100 |
| Silica¹ | 55 | 55 | 55 | 55 | 55 | 55 | 55 |
| Coupling Agent² | 4.5 | 4.5 | 4.5 | 4.5 | 4.5 | 4.5 | 4.5 |
| Sulfur | 0 | 2 | 4 | 2 | 2 | 2 | 2 |
| Accelerator³ | 2 | 2 | 2 | 0 | 4 | 2 | 2 |
| Vulcanization Modifier⁴ | 2 | 2 | 2 | 2 | 2 | 0 | 4 |

| | | | | | | | |
|---|---|---|---|---|---|---|---|
| ¹ Precipitated Silica type Zeosil Premium 200 MP from Rhodia ² bis (alkoxysilylalkyl)polysulfide type ³ N-cyclohexyl benzothiazole-2-sulfenamide ⁴ 1,6-bis(N,N'-dibenzylthiocarbamoyldithio)hexane, as Vulcuren® from Lanxess | | | | | | | |

Figure 4 illustrates the effect of varying the sulfur content in the rubber composition while holding accelerator and modifier contents constant. As seen in Figure 4, use of sulfur with accelerator and modifier results in rapid cure to a relative highly cured final cure state as indicated by the high torque at higher cure times (Samples 2 and 3). Elimination of sulfur as in Sample 1 results in rapid initial cure but a slower approach to a lower final cure state as compared to Samples 2 and 3.

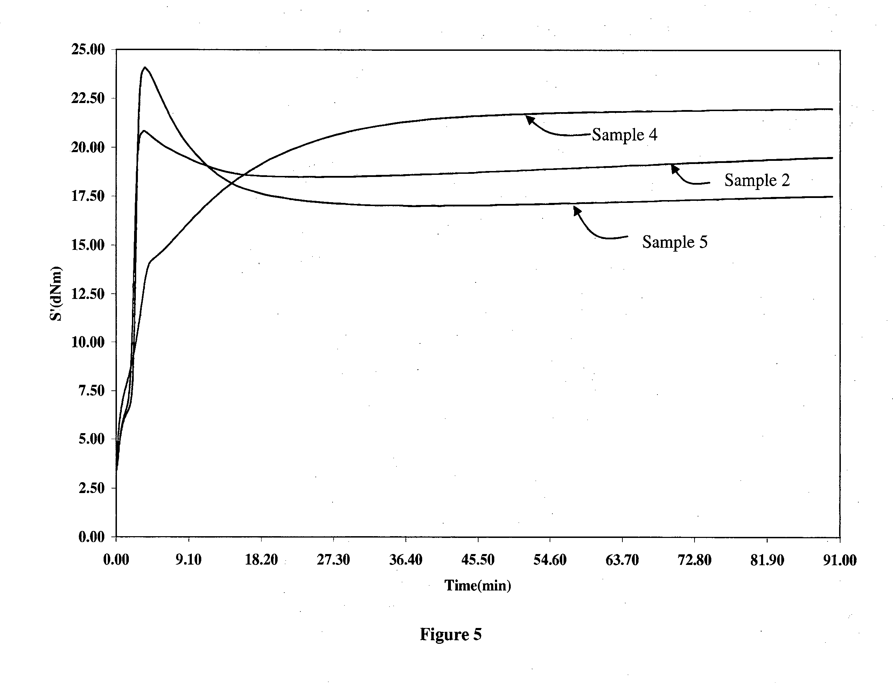

Figure 5 illustrates the effect of varying the accelerator content in the rubber composition while holding sulfur and modifier contents constant. As seen in Figure 5, use of accelerator with sulfur and modifier results in rapid cure to a relative highly cured final cure state as indicated by the high torque at higher cure times (Samples 2 and 5). Elimination of accelerator as in Sample 4 results in rapid initial cure to a lower cured state as compared to Samples 2 and 5, followed by a slow approach to a relatively highly cured final cure state.

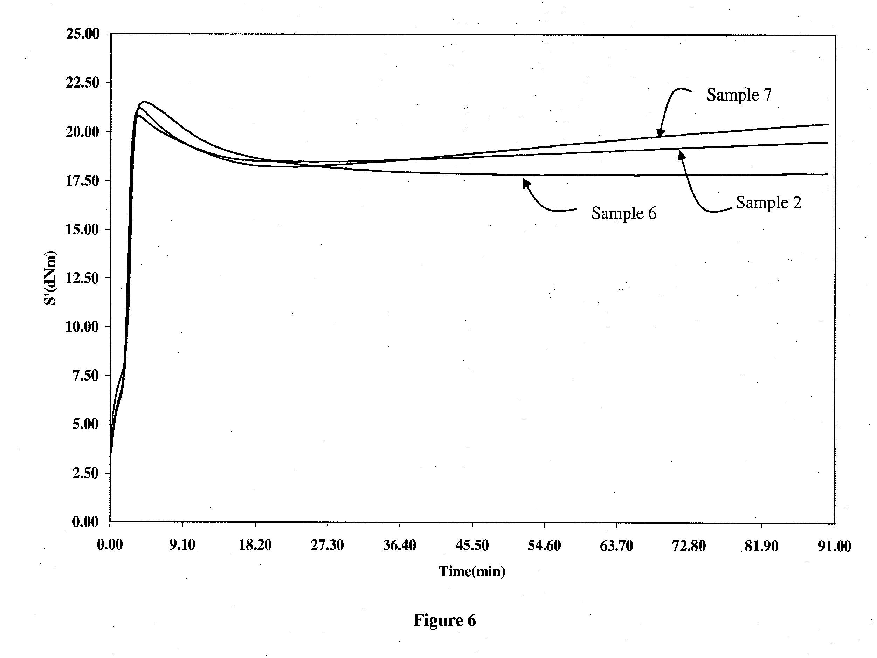

Figure 6 illustrates the effect of varying the modifier content in the rubber composition while holding sulfur and accelerator contents constant. As seen in Figure 6, variation in the modifier content has little effect on the cure profiles of the respective samples, with each showing a rapid initial cure to a relatively highly cured final cure state.

The results in Figures 4 through 6 indicate the surprising and unexpected result that elimination of the accelerator from the rubber composition as in Sample 4 gives a cure profile offering advantages in particular applications, where a partially cured composition is desirable. For example, in a runflat tire insert, under normal operating conditions an insert made from the partially cured composition as in Sample 4 would have a relatively low modulus, allowing a more comfortable ride. Upon deflation of the tire resulting from a puncture or the like, the rubber composition in the insert will experience a high temperature owing to the stresses imparted to the tire sidewall. The high temperature experience by the rubber composition in the sidewall insert will promote cure similar to that shown for Sample 4 in Figure 5, allowing for a gradual increase in modulus and stiffness in the insert and improved endurance for the insert and mileage for the tire during the deflation event.

## Claims

1. A pneumatic runflat tire comprising a sidewall insert, the sidewall insert (12) comprising a rubber composition comprising at least one diene based elastomer, an α,ω-bis(N,N'-dihydrocarbylthiocarbamamoyldithio)alkane; and sulfur in a form selected from the group consisting of elemental sulfur and insoluble sulfur, **characterized in that** the rubber composition is essentially free of cure accelerators, wherein the amount of cure accelerator is less than 0.1 phr.

2. The tire of claim 1 wherein the rubber composition consists essentially of the at least one diene based elastomer, the α,ω-bis(N,N'-dihydrocarbylthiocarbamamoyldithio)alkane and the sulfur.

3. The tire of claim 1 or 2, wherein the α,ω-bis(N,N'-dihydrocarbylthio-carbamamoyldithio)alkane is selected from the group consisting of 1,2-bis(N,N'-di-benzylthiocarbamoyl-dithio)ethane; 1,3-bis(N,N'-dibenzylthiocarbamoyldithio)propane; 1,4-bis(N,N'-dibenzylth- iocarbamoyldithio)butane; 1,5-bis(N,N'-dibenzylthio-carbamoyl-dithio)pentane; 1,6-bis(N,N'-dibenzylthiocarbamoyl-dithio)hexane; 1,7-bis(N,N'-dibenzylthiocarbamoyldithio)heptane; 1,8-bis(N,N'-dibenzylthiocarbamoyldithio)octane; 1,9-bis(N,N'-dibenzylthiocarbamoyl-dithio)nonane; and 1,10-bis(N,N'-dibenzylthiocarbamoyldithio)decane.

4. The tire of claim 1 or 2, wherein the α,ω-bis(N,N'-dihydrocarbylthio-carbamamoyldithio)alkane is 1,6-bis(N,N'-dibenzylthiocarbamoyldithio)hexane.

5. The tire of at least one of the previous claims, wherein the cure accelerator is selected from the group consisting of amines, disulfides, guanidines, thioureas, thiazoles, thiurams, sulfenamides, dithiocarbamates and xanthates.

6. The tire of at least one of the previous claims, wherein the amount of cure accelerator is less than than 0.05 phr.

7. The tire of at least one of the previous claims, wherein the amount of cure accelerator is less than 0.01 phr.

8. The tire of at least one of the previous claims, wherein the rubber composition comprises 100 parts by weight of at least one diene-based elastomer and from 1 to 10 parts by weight, alternatively 1 to 6 parts by weight, per 100 parts by weight of elastomer of the α,ω-bis(N,N'-dihydrocarbylthiocarbamamoyidithio)alkane.

9. The tire of at least one of the previous claims, wherein the rubber composition comprises 100 parts by weight of at least one diene-based elastomer and from 2 to 8 parts by weight, per 100 parts by weight of elastomer, of the α,ω**-**bis(N,N'-dihydrocarbylthiocarbamamoyldithio)alkane.

10. The tire of at least one of the previous claims, wherein the diene based elastomer is selected from the group consisting of emulsion polymerized styrene/butadiene copolymers, solution polymerized styrene/butadiene copolymers, natural rubber, cis 1,4-polybutadiene, synthetic cis 1,4-polyisoprene, styrene/isoprene copolymers, 3,4-polyisoprene, isoprene/butadiene copolymers, medium vinyl polybutadiene having 20 percent to 60 percent by weight of vinyl units, styrene/isoprene/butadiene terpolymers, butyl rubber, polychloroprene, acrylonitrile/butadiene copolymers and ethylene/propylene/diene terpolymers.

## Patentansprüche

1. Notlauf-Luftreifen, umfassend einen Seitenwandeinsatz, wobei der Seitenwandeinsatz (12) eine Kautschukzusammensetzung umfasst, die mindestens ein dienbasiertes Elastomer, ein α,ω-Bis(N,N'-dihydrocarbylthiocarbamoyldithio)alkan und Schwefel in einer Form, ausgewählt aus der aus elementarem Schwefel und unlöslichem Schwefel bestehenden Gruppe, umfasst, **dadurch gekennzeichnet, dass** die Kautschukzusammensetzung im Wesentlichen frei von Vulkanisationsbeschleunigern ist, wobei die Menge an Vulkanisationsbeschleuniger weniger als 0,1 ThK beträgt.

2. Reifen nach Anspruch 1, wobei die Kautschukzusammensetzung im Wesentlichen aus dem mindestens einen dienbasierten Elastomer, dem α,ω-Bis-(N,N'-dihydrocarbylthiocarbamoyldithio)alkan und dem Schwefel besteht.

3. Reifen nach Anspruch 1 oder 2, wobei das α,ω-Bis(N,N'-dihydrocarbylthiocarbamoyldithio)alkan aus der Gruppe ausgewählt ist, bestehend aus 1,2-Bis(N,N'-dibenzylthiocarbamoyldithio)ethan; 1,3-Bis(N,N'-dibenzylthiocarbamoyldithio)propan; 1,4-Bis(N,N'-dibenzylthiocarbamoyldithio)-butan; 1,5-Bis(N,N'-dibenzylthiocarbamoyldithio)pentan; 1,6-Bis(N,N'-dibenzyl-thiocarbamoyldithio)hexan; 1,7-Bis(N,N'-dibenzylthiocarbamoyldithio)heptan; 1,8-Bis(N,N'-dibenzylthiocarbamoyldithio)octan; 1,9-Bis(N,N'-dibenzylthiocarbamoyl-dithio)nonan; und 1,10-Bis(N,N'-dibenzylthiocarbamoyldithio)decan.

4. Reifen nach Anspruch 1 oder 2, wobei das α,ω-Bis(N,N'-dihydrocarbylthiocarbamoyldithio)alkan 1,6-Bis(N,N'-dibenzylthiocarbamoyl-dithio)hexan ist.

5. Reifen nach mindestens einem der vorhergehenden Ansprüche, wobei der Vulkanisationsbeschleuniger aus der aus Aminen, Disulfiden, Guanidinen, Thioharnstoffen, Thiazolen, Thiuramen, Sulfenamiden, Dithiocarbamaten und Xanthaten bestehenden Gruppe ausgewählt ist.

6. Reifen nach mindestens einem der vorhergehenden Ansprüche, wobei die Menge an Vulkanisationsbeschleuniger weniger als 0,05 ThK beträgt.

7. Reifen nach mindestens einem der vorhergehenden Ansprüche, wobei die Menge an Vulkanisationsbeschleuniger weniger als 0,01 ThK beträgt.

8. Reifen nach mindestens einem der vorhergehenden Ansprüche, wobei die Kautschukzusammensetzung 100 Gewichtsteile mindestens eines dienbasierten Elastomers und 1 bis 10 Gewichtsteile, alternativ 1 bis 6 Gewichtsteile, je 100 Gewichtsteile Elastomer des α,ω-Bis(N,N'-dihydrocarbylthiocarbamoyl-dithio)alkans umfasst.

9. Reifen nach mindestens einem der vorhergehenden Ansprüche, wobei die Kautschukzusammensetzung 100 Gewichtsteile mindestens eines dienbasierten Elastomers und 2 bis 8 Gewichtsteile, je 100 Gewichtsteile Elastomer, des α,ω-Bis(N,N'-dihydrocarbylthiocarbamoyldithio)alkans umfasst.

10. Reifen nach mindestens einem der vorhergehenden Ansprüche, wobei das dienbasierte Elastomer aus der Gruppe ausgewählt ist, bestehend aus emulsionspolymerisierten Styrol-Butadien-Copolymeren, lösungspolymerisierten Styrol-Butadien-Copolymeren, Naturkautschuk, cis-1,4-Polybutadien, synthetischem cis-1,4-Polyisopren, Styrol-Isopren-Copolymeren, 3,4-Polyisopren, Isopren-Butadien-Copolymeren, Polybutadien mit mittlerem Vinylgehalt mit 20 Gewichtsprozent bis 60 Gewichtsprozent an Vinyleinheiten, Styrol-Isopren-Butadien-Terpolymeren, Butylkautschuk, Polychloropren, Acrylnitril-Butadien-Copolymeren und Ethylen-Propylen-Dien-Terpolymeren.

## Revendications

1. Bandage pneumatique du type à roulage à plat comprenant un insert pour flanc, l'insert pour flanc (12) comprenant une composition de caoutchouc comprenant au moins un élastomère à base diénique, un α,ω-bis(N,N'-dihydrocarbylthiocarbamoyl-dithio)alcane et un atome de soufre sous une forme choisie parmi le groupe constitué par le soufre élémentaire et le soufre insoluble, **caractérisée en ce que** la composition de caoutchouc est essentiellement exempte d'accélérateurs de la vulcanisation, la quantité d'accélérateur de la vulcanisation étant inférieure à 0,1 phr.

2. Bandage pneumatique selon la revendication 1, dans lequel la composition de caoutchouc est constituée essentiellement par ledit au moins un élastomère à base diénique, le α,ω-bis(N,N'-dihydrocarbyl-thiocarbamoyldithio)alcane et l'atome de soufre.

3. Bandage pneumatique selon la revendication 1 ou 2, dans lequel le α,ω-bis(N,N'-dihydrocarbylthiocarbamamoyldithio)alcane est choisi parmi le groupe constitué par: le 1,2-bis(N,N'-dibenzyl-thiocarbamoyldithio)éthane ; le 1,3-bis(N,N'-dibenzylthiocarbamoyl-dithio)propane ; le 1,4-bis(N,N'-dibenzylthiocarbamoyldithio)butane ; le 1,5-bis(N,N'-dibenzylthiocarbamoyldithio)pentane ; le 1,6-bis(N,N'-dibenzylthiocarbamoyldithio)hexane ; le 1,7-bis(N,N'-dibenzylthio-carbamoyldithio)heptane ; le 1,8-bis(N,N'-dibenzylthiocarbamoyl-dithio)octane ; le 1,9-bis(N,N'-dibenzylthiocarbamoyldithio)nonane ; et le 1,10-bis(N,N'-dibenzylthiocarbamoyldithio)décane.

4. Bandage pneumatique selon la revendication 1 ou 2, dans lequel le α,ω-bis(N,N'-dihydrocarbylthiocarbamamoyldithio)alcane est le 1,6-bis(N,N'-dibenzylthiocarbamoyldithio)hexane.

5. Bandage pneumatique selon au moins une des revendications précédentes, dans lequel l'accélérateur de la vulcanisation est choisi parmi le groupe constitué par des amines, des disulfures, des guanidines, des thiourées, des thiazoles, des thiurames, des sulfénamides, des dithiocarbamates et des xanthates.

6. Bandage pneumatique selon au moins une des revendications précédentes, dans lequel la quantité de l'accélérateur de vulcanisation est inférieure à 0,05 phr.

7. Bandage pneumatique selon au moins une des revendications précédentes, dans lequel la quantité de l'accélérateur de vulcanisation est inférieure à 0,01 phr.

8. Bandage pneumatique selon au moins une des revendications précédentes, dans lequel la composition de caoutchouc comprend 100 parties en poids d'au moins un élastomère à base diénique et de 1 à 10 parties en poids, en variante de 1 à 6 parties en poids, par 100 parties en poids d'élastomère, du α,ω-bis(N,N'-dihydrocarbylthio-carbamoyldithio)alcane.

9. Bandage pneumatique selon au moins une des revendications précédentes, dans lequel la composition de caoutchouc comprend 100 parties en poids d'au moins un élastomère à base diénique est de 2 à 8 parties en poids, par 100 parties en poids d'élastomère, du α,ω-bis(N,N'-dihydrocarbylthio-carbamoyldithio)alcane.

10. Bandage pneumatique selon au moins une des revendications précédentes, dans lequel l'élastomère à base diénique est choisi parmi le groupe constitué par des copolymères de styrène/butadiène polymérisés en émulsion, des copolymères de styrène/butadiène polymérisés en solution, du caoutchouc naturel, du 1,4-cis-polybutadiène, du 1,4-cis-polyisoprène synthétique, des copolymères de styrène/isoprène, le 3,4-polyisoprène, des copolymères d'isoprène/butadiène, du polybutadiène possédant une teneur moyenne en groupes vinyle contenant des unités vinyle à concurrence de 20 % à 60 % en poids, des terpolymères de styrène/isoprène/butadiène, du caoutchouc butyle, du polychloroprène, des copolymères d'acrylonitrile/butadiène et des terpolymères d'éthylène/propylène/diène.
